# EUROPEAN PATENT APPLICATION

(11) **EP 3 396 494 A1**
(43) Date of publication of application: **31.10.2018**
(21) Application number: 17182884.1
(22) Date of filing: 24.07.2017
(51) Int. Cl.: G06F 3/01, G06F 3/03, B25J 9/16

(54) **ELECTRONIC DEVICE AND METHOD FOR EXECUTING INTERACTIVE FUNCTIONS**

(30) Priority: 24.04.2017 TW 106113546
(71) Applicant: Kinpo Electronics, Inc., New Taipei City 22201 (TW)
(72) Inventor: TING, Yu-Lun, Taiwan (R.O.C.) New Taipei City 22201, (TW); LIN, Tung-Yuan, Taiwan (R.O.C.) New Taipei City 22201, (TW); TSAI, Chung-Yao, Taiwan (R.O.C.) New Taipei City 22201, (TW)
(74) Representative: Haseltine Lake LLP

(57) **Abstract**

An electronic device for executing a plurality of interactive functions is provided. The electronic device includes a laser ranging element, a storage element and a processor coupled to the laser ranging element and the storage element. The laser ranging element sequentially obtains a plurality of environmental contours in a detection range. The storage element stores a plurality of preset motions and the interactive functions. Each preset motion corresponds to one of the interactive functions. The processor determines a plurality of feet positions according to the environmental contours, determines an operation motion according to the feet positions, and determines whether the operation motion corresponds to a specific motion of the preset motions stored in the storage element. In response to the operation motion being corresponding to the specific motion, the processor executes the interactive function corresponding to the specific motion. In addition, a method for executing interactive functions is also provided.

## Description

### Technical Field

The disclosure relates a method for human-machine interaction, and more particularly, to an electronic device and a method for executing interactive functions by utilizing foot motions.

### BACKGROUND

With the development in technology, robots have gradually rooted deeply into human life. In general, robots are provided with autonomy, which refers to the capability of robots in sensing the environment and detecting external changes before making the corresponding response.

For the existing robots, common controlling methods include, for example, a voice control or an image recognition control. In terms of the image recognition control, for example, the robots can be configured with a video recorder such that a user image can be captured by utilizing the video recorder, and operations like gestures currently executed by the user can be recognized through a massive amount of image analysis. However, a relatively high level of computing capability is required to achieve the technique mentioned above, and an additional correction is also required to reduce an error rate.

### SUMMARY

The disclosure is directed to an electronic device and a method for executing interactive functions, which are capable of recognizing operations executed by feet of the user through a laser ranging element so as to provide the convenience in use while reducing computing costs.

The disclosure provides an electronic device, which is configured to execute a plurality of interactive functions. The electronic device includes a laser ranging element, a storage element and a processor coupled to the laser ranging element and the storage element. The laser ranging element sequentially obtains a plurality of environmental contours in a detection range. The storage element stores a plurality of preset motions and the interactive functions. Each preset motion corresponds to one of the interactive functions. The processor determines a plurality of feet positions according to the environmental contours, determines an operation motion according to the feet positions, and determines whether the operation motion corresponds to a specific motion of the preset motions stored in the storage element. In response to the operation motion being corresponding to the specific motion, the processor executes the interactive function corresponding to the specific motion.

From another perspective, the disclosure proposes a method for executing interactive functions, which is adapted to an electronic device having a laser ranging element and a storage element. The storage element records a plurality of preset motions and a plurality of interactive functions. Each preset motion corresponds to one of the interactive functions. The method for executing interactive functions includes the following steps. Environmental contours are sequentially obtained in a detection range by the laser ranging element. Feet positions are determined according to the environmental contours and an operation motion is determined according to the feet positions. Whether the operation motion corresponds to a specific motion of the preset motions is determined. In response to the operation motion being corresponding to the specific motion, the interactive function corresponding to the specific motion is executed.

Based on the above, information obtained by the laser ranging element of the disclosure can be used to recognize the operation motion executed by feet of the user, so that the corresponding interactive function can be executed in response to the operation motion executed by the user. With the high precision of the laser ranging element, the error rate can be reduced accordingly. As a result, the user can operate the electronic device to execute the interactive functions through intuitive motions so a computing burden can be significantly reduced while reducing equipment costs in addition to the convenience in use.

To make the above features and advantages of the disclosure more comprehensible, several embodiments accompanied with drawings are described in detail as follows.

### BRIEF DESCRIPTION OF THE DRAWINGS

FIG. 1 illustrates a block diagram of an electronic device according to an embodiment of the disclosure.
FIG. 2 illustrates a flowchart of a method for executing interactive functions according to an embodiment of the disclosure.
FIG. 3 illustrates a schematic diagram for obtaining one environmental contour according to an embodiment of the disclosure.
FIG. 4 illustrates a schematic diagram of a feet position and an operator position according to an embodiment of the disclosure.
FIG. 5 illustrates a schematic diagram an operation motion according to an embodiment of the disclosure.

### DETAILED DESCRIPTION

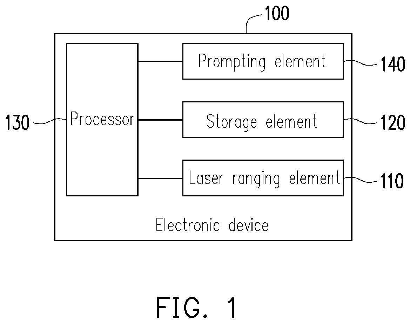

FIG. 1 illustrates a block diagram of an electronic device according to an embodiment of the disclosure. With reference to FIG. 1, an electronic device 100 of the present embodiment is, for example, a domestic robot, a cleaning robot or the like, and is configured to execute a plurality of interactive functions in response to commands from the user. However, the disclosure is not limited to the above. Herein, the interactive functions include, for example, a navigated movement or an environment cleanup. Nonetheless, the disclosure is not limited to the above either, and instead, any function executable in response to the commands from the user falls within the scope of the interactive functions of the disclosure.

In the present embodiment, the electronic device 100 at least includes a laser ranging element 110, a storage element 120, a processor 130 and a prompting element 140. Among them, the processor 130 is coupled to the laser ranging element 110, the storage element 120 and the prompting element 140. Depending on various interactive functions executable by the electronic device 100, the electronic device 100 can further include elements for executing various interactive functions, which are not particularly limited by the disclosure. For instance, the electronic device 100 capable of executing the navigated movement can further include a motor and a tire, whereas the electronic device 100 capable of executing the environment cleanup can further include a cleaning tool.

The laser ranging element 110 can be a laser ranging apparatus, which can emit a plurality of laser pulses in a detection range thereof, for example. The laser pulses are reflected after hitting on a surface of an object so the laser ranging element 110 can calculate a distance between the laser ranging element 110 and the object by utilizing a time of flight of the photon with the speed of light the after receiving the reflected laser pulses.

Therefore, in the present embodiment, the laser ranging element 110 can be configured to detect an environmental contour in the detection range on a plane above its installment height. In detail, the laser ranging element 110 of the present embodiment is, but not limited to, installed on a position less than 50 cm above the bottom of the electronic device 100 and has the detection range being 180 degrees facing forward. Said laser ranging element 110 can emit one laser pulse per 0.5 degree for measuring the distance in the 180 degrees facing forward. Accordingly, once the range of 180 degrees is completely scanned, one environmental contour in the detection range from the installment height can be obtained. In an embodiment, the laser ranging element 110 can provide information regarding the surrounding environment, so as to achieve the purpose of preventing collision.

In addition, environmental changes can be obtained by sequentially scanning a plurality of said environmental contours. It should be noted that, in some embodiments, the laser ranging element 110 may also directly obtain environmental variation information regarding whether the object is moving close to or away from the laser ranging element 110 by Doppler Effect, but the disclosure is not limited thereto.

The storage element 120 is configured to store data, information, module, application, and may be in form of a random access memory (RAM), a read-only memory (ROM), a flash memory or similar elements, or a combination of the aforementioned elements, which are not particularly limited by the disclosure. In the present embodiment, the storage element 120 stores a plurality of preset motions and the interactive functions corresponding to each of the preset motions. The preset motions include motions executed by feet, such as taking one step back, etc.

The processor 130 of is, for example, a central processing unit (CPU) or other programmable devices for general purpose or special purpose such as a microprocessor and a digital signal processor (DSP), a programmable controller, an application specific integrated circuit (ASIC), a programmable logic device (PLD) or other similar devices or a combination of above-mentioned devices, which may be used to control overall operation of the electronic device 100. In the present embodiment, the processor 130 can be used to determine a user operation by using the information obtained by the laser ranging element 110 and instruct the electronic device 100 to execute the interactive function in response to the user operation.

The prompting element 140 is, for example, a speaker or a display screen, and is configured to send a prompt message. In the present embodiment, the prompting element 140 further includes a microphone or a touch screen, which can be used to receive a feedback from the user in addition to sending the prompt message. However, the disclosure is not intended to limit the type of the prompting element 140, and persons with ordinary skill in the art can choose the prompting element 140 based on demands.

In the electronic device 100 introduced by the embodiment of FIG. 1, various elements can cooperate with one another to execute the corresponding interactive function in response to the user operation. The method for executing the interactive functions is described below by various embodiments with reference to the electronic device 100 of FIG. 1.

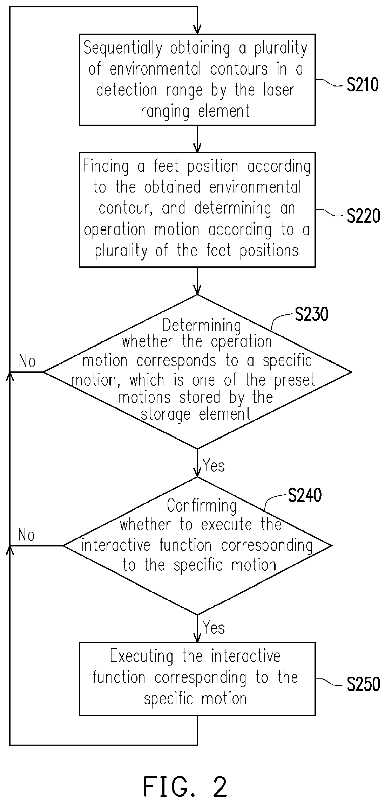

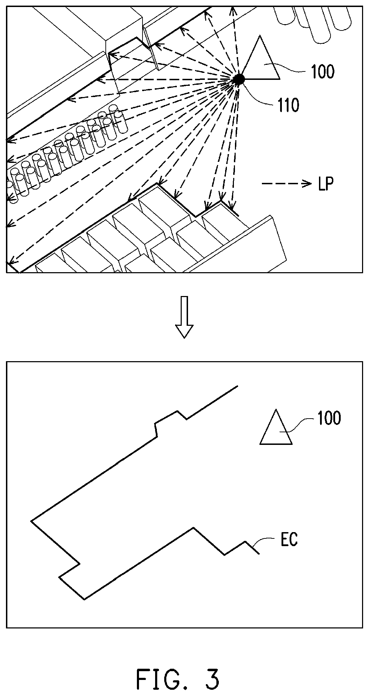

FIG. 2 illustrates a flowchart of a method for executing interactive functions according to an embodiment of the disclosure. With reference to FIG. 2, first of all, the processor 130 sequentially obtains a plurality of environmental contours in a detection range of the laser ranging element 110 by the laser ranging element 110. FIG. 3 illustrates a schematic diagram for obtaining one environmental contour according to an embodiment of the disclosure. As shown in FIG. 3, in the present embodiment, the laser ranging element 110 emits a plurality of laser pulses LP in the 180 degrees range facing forward so as to obtain one environmental contour EC. A plurality of the environmental contours EC can be sequentially obtained by sequentially repeating aforementioned operation.

Each time after the environmental contour EC is obtained, in step S220, the processor 130 finds a feet position according to the obtained environmental contour EC, and determines an operation motion executed by feet of the user according to a plurality of the feet positions found from a plurality of the environmental contours. In the present embodiment, the processor 130 determines the operation motion according to changes in an operator position. Therefore, after the feet positions are found, the processor 130 further analyzes the operator position from the feet positions. However, in other embodiments, for example, the operation motion may be obtained directly from changes in the feet position, that is, the disclosure is not intended to limit the method for determining the operation motion from the feet positions.

It should be noted that, changes in the operator position are not completely identical to changes in the feet position when determining the operation motion because changes in the feet position do not necessarily lead to changes in the operator position. For example, when the user turns around in situ, the processor 130 can determine that there are changes in the feet position but no changes made in the operator position. Persons with ordinary skill in the art can decide the method for determining the operation motion according to the feet positions based on demands.

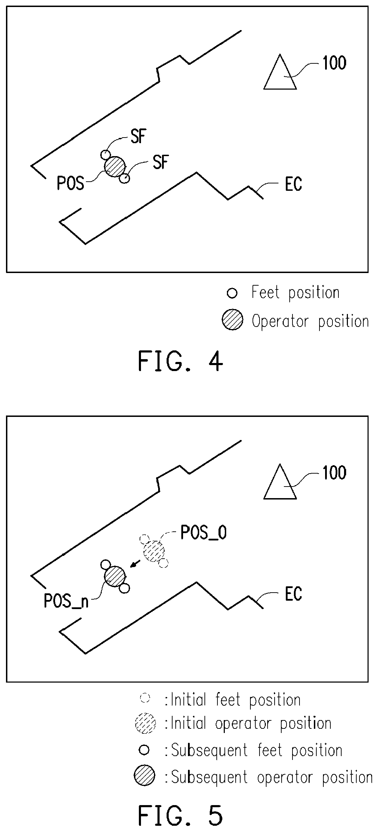

FIG. 4 illustrates a schematic diagram of a feet position and an operator position according to an embodiment of the disclosure. With reference to FIG. 4, specifically, the processor 130 can recognize a single foot contour SF that meets a foot feature by analyzing the environmental contour EC, where the foot feature may be obtained by establishing a model based on a machine learning method in advance, but the disclosure is not limited thereto. When two of the single foot contours SF that meets the foot feature are recognized in the environmental contour EC by the processor 130 and a distance between these two single foot contours SF is less than a preset stride length, these two single foot contours are determined as the feet position in said environmental contour EC. Otherwise, it is determined that the feet position does not exist in such environmental contour EC. It should be noted that, a stride length of ordinary people is approximately 50 to 60 cm. Therefore, in the present embodiment, the preset stride length may be, for example, preset as 60 cm, but the disclosure is not limited thereto. In the present embodiment, after obtaining the feet position upon analysis, the processor 130 further takes a middle point between the two single foot contours SF as an operator position POS.

FIG. 5 illustrates a schematic diagram an operation motion according to an embodiment of the disclosure. In the present embodiment, the environmental contour of a first analyzed feet position is known as a first environmental contour, and the processor 130 can store the first analyzed feet position as an initial feet position and stores the operator position determined according to the initial feet position as an initial operator position POS_0. In detail, if the initial feet position is not already stored by the time when the feet position is obtained upon analysis by the processor 130, this analysis is regarded as the first analyzed feet position and this first analyzed feet position is then stored as the initial feet position. Next, the processor 130 analyzes at least one subsequent feet position from at least one environmental contour after an acquisition time of the first environmental contour, and the environmental contour form which the subsequent environmental contour is obtained upon analysis is known as a second environmental contour. The processor 130 uses the operator position determined according to the subsequent feet position as a subsequent operator position POS_n. In the embodiment of FIG. 5, for example, the number of the subsequent operator position POS_n is one, but the disclosure is not limited thereto. In other embodiments, a plurality of the subsequent operator position POS_n may also coexist. In the present embodiment, the processor 130 records the initial feet position and the subsequent feet position being found.

Based on the initial operator position POS_0 and the subsequent operator POS_n being recorded, the operation motion can be determined by the processor 130. It is noted that, the more the subsequent operator positions POS is, the more complex the operation motion can be determined. In the embodiment of FIG. 5, the operation motion is "taking one step back" as determined by the processor 130 according to the initial operator position POS_0 and the subsequent operator position POS_n.

In step S230, the processor 130 determines whether the operation motion corresponds to a specific motion, which is one of the preset motions stored by the storage element 120. If yes, the method proceeds to step S240. Otherwise, the processor 130 deletes the stored initial feet position and the method returns to step S210 to continue obtaining the environmental contour in order to find the initial feet position.

In the present embodiment, the storage element 120 stores the preset motions and the interactive functions corresponding to each of the preset motions. For instance, among the preset motions and the corresponding interactive functions stored by the storage element 120, the preset motion "taking one step left before taking one step right" may correspond to, for example, the interactive function "room cleanup", whereas the preset motion "taking one step back" may correspond to, for example, the interactive function "navigated movement".

In the present embodiment, the processor 130 determines that the operation motion corresponds to the specific motion "taking one step back" in step S230. In response to the operation motion being corresponding to the specific motion "taking one step back", the processor 130 sends a prompt message through the prompting element 140 to prompt the user for confirmation on whether to execute the interactive function corresponding to said specific motion. If the prompting element 140 does receive a feedback message for confirmation from the user, the method proceeds to step S250; otherwise, the method returns to step S210.

In the present embodiment, the prompting element 140 is, for example, a voice equipment including a speaker and a microphone, which sends the prompt message to prompt the user for confirmation on whether to execute the interactive function "navigated movement" through the speaker. Then, after the feedback message "confirmed" is received by the microphone from the user, the method proceeds to step S250. Nevertheless, in other embodiments, after the processor 130 determines that the operation motion corresponds to the specific motion of the preset motions in step S230, the method can directly proceeds to the step S250 without executing step S240. In other words, step S240 is optional in the present embodiment, and persons with ordinary skill in the art can decide whether to add step S240 to the method for executing interactive functions of the disclosure based on demands.

In step S250, the processor 130 executes the interactive function corresponding to the specific motion in response to the operation motion being corresponding to the specific motion. In the present embodiment, because the operation motion corresponds to the specific motion "taking one step back", the processor 130 controls the electronic device 100 to execute the interactive function "navigated movement" corresponding to "taking one step back".

In the present embodiment, after step S250 is executed, the processor 130 clears information regarding the stored initial feet position, the subsequent feet position, etc., and the method returns to step S210 to obtain the environmental contour for responding to the next operation motion.

To sum up, in the electronic device and the method for executing interactive functions provided by the embodiments of the disclosure, the information obtained by the laser ranging element can not only be used for dodging obstacle, the operation motion executed by feet of the user can also be recognized by using the information so the corresponding interactive function can be executed in response to the operation motion executed by the user. As a result, the user can operate the electronic device to execute the interactive functions through intuitive motions so the computing burden can be significantly reduced while reducing equipment costs in addition to the convenience in use. Moreover, according to the embodiments of the disclosure, a high precision of the laser ranging element together with the prompt message of the prompting device can further reduce the error rate for the operation motion.

## Claims

1. An electronic device (100) for executing a plurality of interactive functions, comprising:
a laser ranging element (110), sequentially obtaining a plurality of environmental contours (EC) in a detection range;
a storage element (120), storing a plurality of preset motions and the interactive functions, wherein each preset motion corresponds to one of the interactive functions; and
a processor (130), coupled to the laser ranging element (110) and the storage element (120), determining a plurality of feet positions according to the environmental contours (EC), determining an operation motion according to the feet positions, and determining whether the operation motion corresponds to a specific motion of the preset motions,
wherein the processor (130) executes the interactive function corresponding to the specific motion in response to the operation motion being corresponding to the specific motion.

2. The electronic device (100) according to claim 1, wherein the processor (130) determines an initial feet position according to a first environmental contour of the environmental contours (EC), determines at least one subsequent feet position according to at least one second environmental contour of the environmental contours (EC), and determines the operation motion according to the initial feet position and the at least one subsequent feet position,
wherein an acquisition time of the first environmental contour is prior to an acquisition time of the at least one second environmental contour.

3. The electronic device (100) according to claim 2, wherein each of the initial feet position and the subsequent feet position comprises two single foot contours (SF), wherein a distance between the two single foot contours (SF) is less than a default stride length and each of the single foot contours (SF) meets a foot feature.

4. The electronic device (100) according to claim 2, wherein the processor (130) determines an initial operator position (POS_0) according to the initial feet position, determines at least one subsequent operator position (POS_n) according to the at least one subsequent feet position; and determines the operation motion according to the initial operator position (POS_0) and the at least one subsequent operator position (POS_n).

5. The electronic device (100) according to claim 1, further comprising:
a prompting element (140), coupled to the processor (130), wherein the prompting element (140) is configured to send a prompt message in response to the operation motion being corresponding to the specific motion.

6. A method for executing interactive functions, adapted to an electronic device (100) having a laser ranging element (110) and a storage element (120), wherein the storage element (120) records a plurality of preset motions and a plurality of interactive motions, wherein each preset motion corresponds to one of the interactive motions, and the method comprises:
sequentially obtaining a plurality of environmental contours (EC) in a detection range by the laser ranging element (110);
determining a plurality of feet positions according to the environmental contours (EC) and determining an operation motion according to the feet positions;
determining whether the operation motion corresponds to a specific motion of the preset motions; and
executing the interactive function corresponding to the specific motion in response to the operation motion being corresponding to the specific motion.

7. The method according to claim 6, wherein the step of determining the feet positions according to the environmental contours (EC) and determining the operation motion according to the feet positions comprises:
determining an initial feet position according to a first environmental contour of the environmental contours (EC);
determining at least one subsequent feet position according to at least one second environmental contour of the environmental contours (EC); and
determining the operation motion according to the initial feet position and the at least one subsequent feet position, wherein an acquisition time of the first environmental contour is prior to an acquisition time of the at least one second environmental contour.

8. The method according to claim 7, wherein each of the initial feet position and the subsequent feet position comprises two single foot contours (SF), wherein a distance between the two single foot contours (SF) is less than a default stride length and each of the single foot contours (SF) meets a foot feature.

9. The method according to claim 7, wherein the step of determining the operation motion according to the initial feet position and the at least one subsequent feet position comprises:
determining an initial operator position (POS_0) according to the initial feet position;
determining at least one subsequent operator position (POS_n) according to the at least one subsequent feet position; and
determining the operation motion according to the initial operator position (POS_0) and the at least one subsequent operator position (POS_n).

10. The method according to claim 6, further comprising:
sending a prompt message in response to the operation motion being corresponding to the specific motion.
